# EUROPEAN PATENT SPECIFICATION

(11) **EP 3 296 035 B1**
(45) Date of publication and mention of the grant of the patent: **19.07.2023**
(21) Application number: 17001552.3
(22) Date of filing: 18.09.2017
(51) Int. Cl.: B21D 39/04, F16L 13/14, B25B 27/10

(54) **CRIMPING APPARATUS FOR CRIMPING PIPE FITTING MEMBERS ON FLEXIBLE PIPES**
CRIMPVORRICHTUNG ZUM ANPRESSEN VON ROHRVERBINDUNGEN AUF FLEXIBLEN ROHREN
APPAREIL DE SERTISSAGE POUR SERTIR DES RACCORDS DE TUYAUX SUR DES TUYAUX FLEXIBLES

(30) Priority: 20.09.2016 IT 201600094444
(43) Date of publication of application: 21.03.2018
(73) Proprietor: KGR S.p.A., 10032 Brandizzo (Torino) (IT)
(72) Inventor: Minetti, Pier Domenico, 15011 Acqui Terme (AL) (IT)
(74) Representative: Cian, Paolo

(56) References cited:
- EP-A2- 1 106 276
- JP-A- S57 109 536
- US-A1- 2002 056 307

## Description

The present invention relates to crimping apparatuses usable for fastening a pipe fitting member, typically of metal, to a flexible pipe, usually made of a plastic material such as an elastomeric material, by a crimping operation.

A crimping device of the type defined above is known, for example, from EP-1 106 276. The apparatus of this document comprises a pair of opposite jaw members, movable one with respect to the other, each of which supports a pair of crimping members slidably mounted on the respective jaw member, which in turn support a plurality of movable punches or clamping teeth. A crimping cavity is defined between these punches, which is intended to accommodate a pipe with a respective pipe fitting to be crimped. When the pipe and the respective pipe fitting are in the proper crimping position within the cavity, the jaws of the apparatus undergo a relative approach displacement as a result of the operation of an actuator, so as to cause the crimping punches to move to the inside of the cavity to perform a crimping operation of the pipe.

The apparatus of this document includes a stationary frame supporting the movable jaw members and the various driving and control devices of the apparatus, which has to be placed on a fixed support plane. In particular, the crimping operation of a pipe requires the latter to be manually fed by an operator into the crimping cavity of the apparatus, which entails relatively long time and not negligible costs.

In addition, the known apparatuses of the kind mentioned above are mostly intended for performing crimping operations of pipe fittings on flexible pipes having a simple, generally linear, shape, and at zones thereof which can be easily reached, typically at the ends of the flexible pipe, and are instead not suitable for carrying out crimping operations of pipe fittings at intermediate zones of long flexible pipes and/or pipes having a complex shape. In fact, it is not simple for an operator to insert a relatively long flexible pipe and having a complex shape into the crimping cavity of the apparatus, and to slide it for a determined length in this cavity that is usually slightly larger than the pipe to be crimped, and then to keep it in the correct crimping position with the portions of the pipe that extend cantilever with respect to the apparatus and project from the crimping area, which entails the risk of performing an inaccurate crimping operation, and thus obtaining defective pieces.

A further crimping apparatus of the type defined above is known, for example, from document EP-1 230 716, which describes a crimping machine provided with a pair of crimping jaws movable between an open position and a closed position, of the so-called "open throat" type, in which the crimping cavity can be accessed from an outer side of the apparatus in the open configuration of the jaws. A crimping head is associated with each jaw, which comprises set of movable crimping members, each of which can be removably coupled to a respective crimping punch or tooth that faces the crimping cavity. The set of the various crimping punches constitutes a unit that can be coupled, with possibility to be replaced, to the crimping members of the respective jaw. This technical solution allows various sets of crimping punches of different sizes to be used, each of which corresponds to a crimping cavity of a different width, so that the apparatus can be fitted to pipes having a different diameter.

In spite of the fact that the possibility of coupling sets of crimping punches of a different size makes this apparatus versatile, just owing to its structure it is rather complex and delicate in operation. In addition, this machine also includes a stationary frame that supports the crimping jaws slidably relative to each other, and that must rest on a fixed support plane. This necessarily involves the intervention of an operator to feed manually a pipe to be crimped into the crimping cavity of the apparatus.

Documents US-8,381,645 and US-7,043,806 also describe crimping apparatuses of the so-called "open throat" type, conceptually similar to that of the above-mentioned document but lacking in the possibility of replacing the clamping punch sets. In particular, these apparatuses are conceived so as to include a stationary frame that needs to be positioned on a support plane, which requires the manual intervention of an operator to perform a crimping operation.

Other crimping apparatus are also known, for example of the type described in EP-452 791, which do not require a stationary frame, in which the two crimping jaws arranged on opposite sides with respect to the clamping cavity are articulably connected to lever shaped grasp and control arms that can be manually operated to apply a compression force on a pair of tubular members to be crimped arranged in the crimping cavity. When the jaws are in their spaced configuration corresponding to the open position of the apparatus and in which the tubular members to be clamped can slide into the crimping cavity, a lateral opening connected to the crimping cavity is formed between the crimping members associated with the jaws.

The apparatus of this document, which in any case requires the manual intervention by an operator, is not suitable for applying a force of a sufficient value on a metal pipe fitting and on a pipe to be crimped, such as to allow a fully reliable crimping to be obtained in any condition. Moreover, the structure of the apparatus does not allow to space its jaws so as to allow the tubular members to be crimped to be radially inserted into the crimping cavity through the said lateral opening.

In particular, the invention relates to a crimping apparatus of the type defined in the preamble of claim 1.

Such a crimping apparatus is known from US-2002/056307-A1.

The object of the present invention is to provide a crimping apparatus that allows pipe fittings to be crimped on flexible pipes by applying a strong force and with a high precision, with the aim of getting a fully reliable crimping of one or more pipe fittings on a respective pipe, and that can be used to perform also a plurality of crimping operations of various pipe fittings on a pipe that is also very extended in length and having a complex shape, for example provided with several curved portions, and to allow an optimal repeatability of a number of crimping operations on various pipes, with an always constant crimping quality and with considerably reduced times compared to those required by the known crimping apparatuses, without requiring any manual intervention of an operator.

These objects are achieved by an apparatus as defined in the appended claims.

In particular, the apparatus comprises a stationary structure for positioning at least one pipe and at least one pipe fitting in a predetermined crimping configuration, and movement means for spatially moving the crimping unit, which are adapted to bring the crimping unit by at least one zone of said at least one pipe positioned on the stationary structure, in order to perform a crimping operation of said at least one pipe fitting on said at least one pipe. By virtue of these features, the invention allows localized crimping operations to be performed on pipes having also a very complex shape, for example including multiple flexible pipe parts and several pipe fittings, both at the end zones of the pipe and at intermediate zones with respect to the extension of the pipe, without requiring any intervention by an operator and in very short time, while assuring simultaneously a high and constant quality of the pipes crimped by the apparatus.

According to a preferred feature of the invention, the crimping unit comprises a frame provided with connection means to connect it to the movement means, which consist preferably of a robotized arm. This allows the crimping apparatus to be easily moved between a series of zones of the pipe arranged on the positioning structure, at which the crimping operations must be carried out in succession, which makes quick and reliable the entire crimping step of a pipe.

Further features and advantages of the invention will be clearly apparent from the following detailed description, referred to the appended drawings provided by way of non-limiting example, in which:

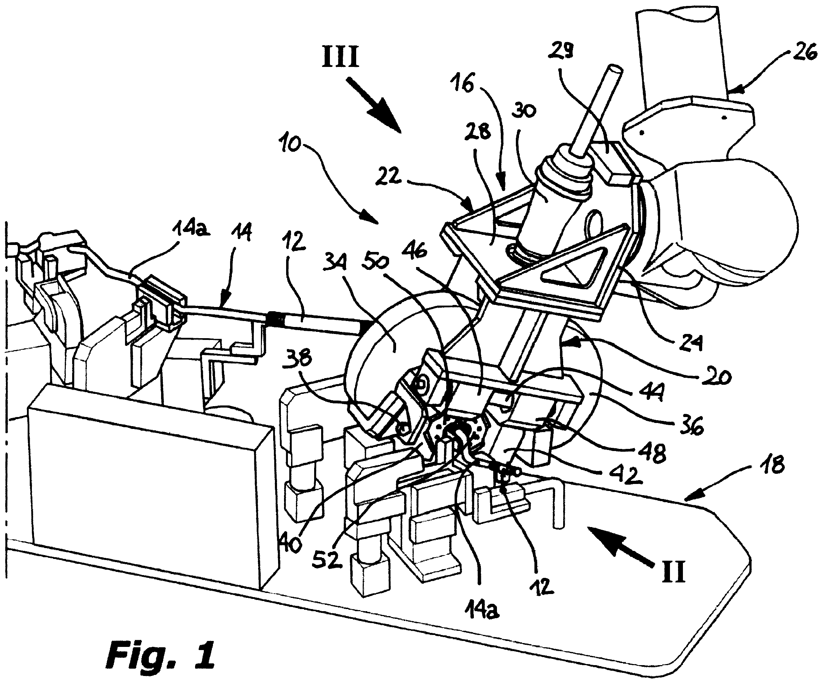

Figure 1 is a schematic perspective overall view of the crimping apparatus of the invention,

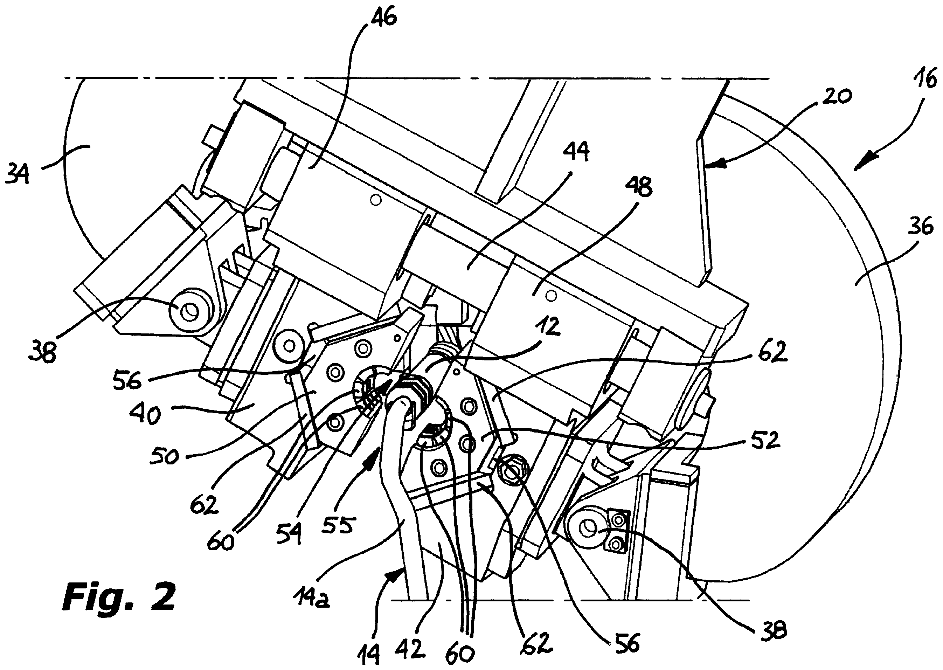

Figure 2 is an enlarged view of a detail indicated by arrow II of Figure 1,

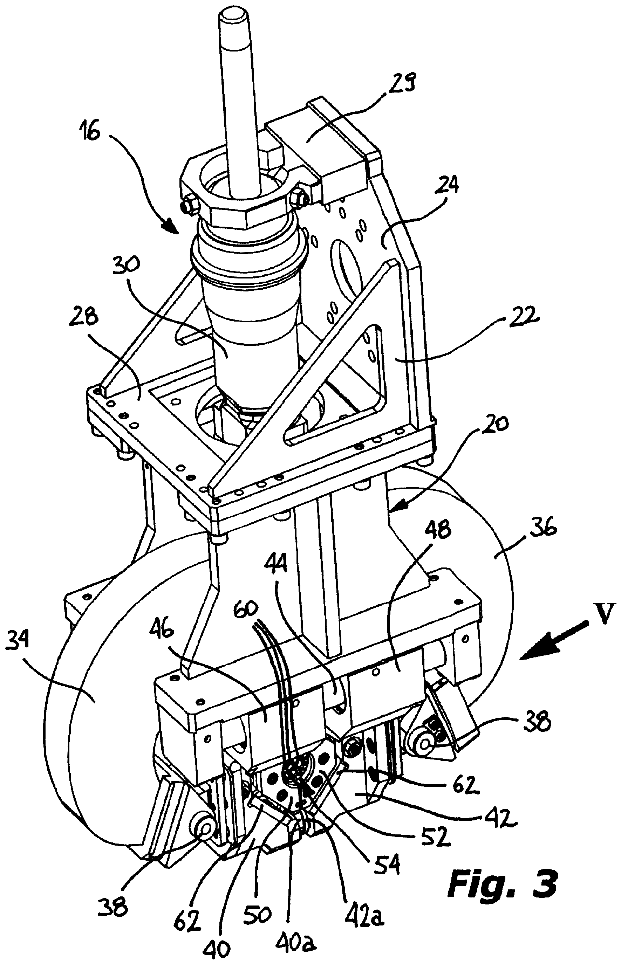

Figure 3 is an enlarged view of the crimping unit of the apparatus of the invention, indicated by arrow III of Figure 1,

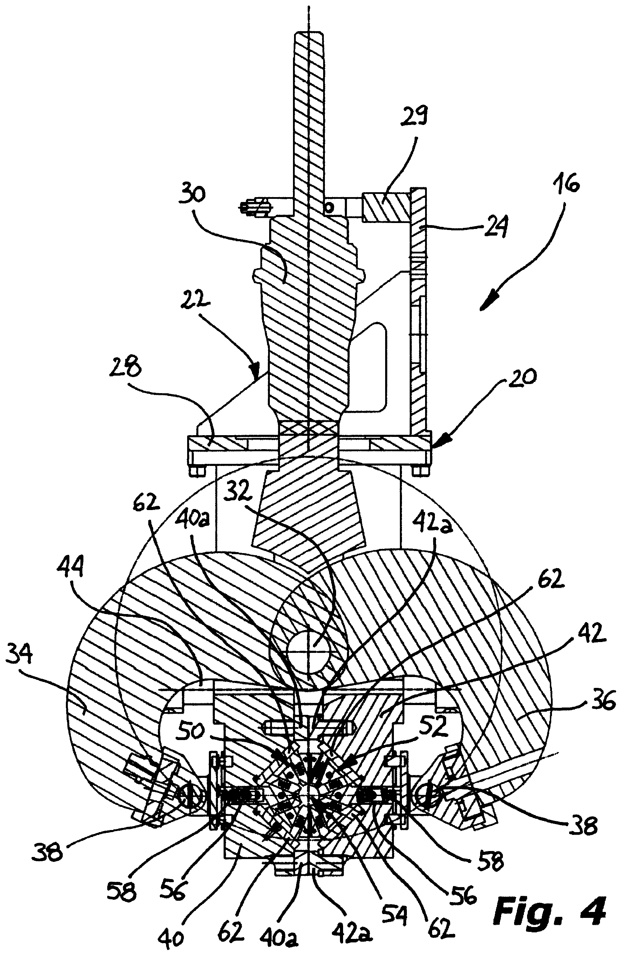

Figure 4 is a side elevation view of the crimping unit of Figure 3, sectioned along a longitudinal central plane,
Figure 5 is an enlarged view of a detail indicated by arrow V of Figure 3, showing the crimping heads supported by the jaws of the crimping unit, in a condition of mutual contact,
Figure 6 is a view similar to Figure 5, in which also the jaws of the crimping unit are in a condition of mutual contact,
Figures 7 and 8 are enlarged views showing details of Figures 5 and 6, respectively, indicated by arrows VII and VIII of these last figures,

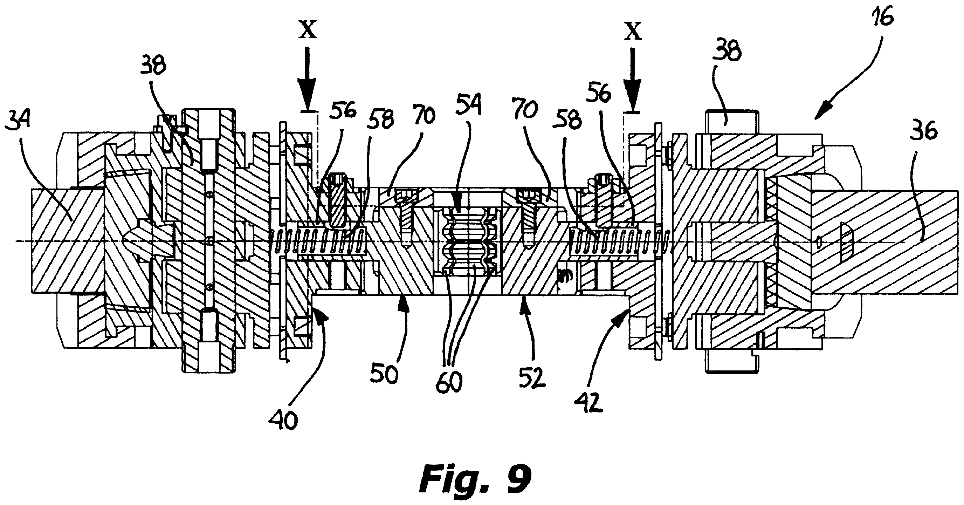

Figure 9 is a top elevational view sectioned along line IX-IX of Figure 8, and
Figure 10 is a further enlarged, side elevational exploded view, sectioned along line X-X of Figure 9, showing a detail thereof.

With reference to the figures, a crimping apparatus according to the invention is indicated 10 as a whole.

The apparatus 10 is adapted to perform crimping operations of one or more pipe fitting members 12 on a single or composite pipe 14, in the latter case comprising several portions 14a of a flexible pipe, and essentially includes a crimping unit 16 and a stationary structure 18 for positioning said at least one pipe 14 and the relevant pipe fitting or fittings 12 to be crimped.

In particular, the structure 18 comprises a platform on which a series of reference members are arranged, which are adapted to allow the pipe fittings 12 and the pipe portions 14a to be crimped to be supported and secured in a predetermined crimping configuration. These reference members may have a fork shape, particularly if they are intended only to support the pipe fittings 12 and/or the portions 14a of the pipe 14, or they may be provided with fastening members known-per-se and not shown in the figures, to keep the pipe 14 and the relevant pipe fittings 12 in the desired crimping position, for example arranged close to the ends of the pipe 14 but also at the intermediate zones thereof, where the crimping operations are to be performed. Thus, the pipe 14 associated with the structure 18 may have a particularly complex shape owing to the connection of several portions curved also on different planes, and having also a very long extension.

The crimping unit 16, which is usually spaced from the frame 18, comprises a main frame indicated 20 adapted to support the various members thereof. Preferably, the frame 20 comprises an angular portion 22 including a first plate 24 provided with connecting means, such as holes or projections, adapted to allow it to be fixed to spatial movement means, typically at the distal end of a robotic arm 26 of a type known-per-se, by which the crimping unit 16 can be spatially moved. The movement means 26, in particular, are adapted to bring the crimping unit 16 at one or more zones of the pipe 14 arranged on the structure 18, at which a respective crimping operation of a pipe fitting 12 should be performed on the pipe 14.

A second plate 28 of the angular portion 22 of the frame 20 supports a linear actuator 30, typically consisting of a double acting hydraulic cylinder, the body of which is also connected to the portion 22 by means of a bracket 29 projecting from the plate 24. The actuator 30 comprises a portion movable with respect to the frame 20 in order to allow a corresponding displacement of a pivot 32 to be controlled, which pivot is arranged transversely to the axis of the actuator 30, to which the first ends of a pair of arched and symmetrical actuating arms 34 and 36 are articulated.

The second end of each arm 34, 36 is articulated, by means of a hinge pin 38 parallel to the pin 32, to a plate integral with a respective crimping jaw 40, 42 of the crimping unit 16.

The frame 20 supports also guide means for guiding the linear movement of the jaws 40, 42 along a common displacement direction. These guide means comprise at least one rod 44 connected to the frame 20 and directed perpendicularly to the axis of the actuating cylinder 30, on which a pair of bushes 46, 48 are slidably mounted, each of which is rigidly connected to a respective jaw 40, 42, in such a manner to ensure that the movement of the jaws 40, 42 is always parallel to said common displacement direction. A pair of respective abutment pads 40a and 42a is secured to each jaws 40, 42, the purpose of which will be clarified in the following.

As a result of the drive of the actuator cylinder 30, the jaws 40 and 42 move along the common displacement direction between a spaced position and a close position, until they reach the mutual contact.

Each jaw 40, 42 supports a respective crimping head 50, 52 having a substantially semi-circular arched shape, which defines a semi-circular inner hollow zone. The two semi-circular hollow zones of the two crimping heads 50, 52 delimit together a crimping cavity 54 of the crimping unit 16, which is adapted to receive the pipe 14 and a respective pipe fitting 14 in view of performing a crimping operation.

Each crimping head 50, 52 is elastically movably mounted with respect to the relevant jaw 40, 42 by means of a respective appendage 56 that extends radially outwardly and that slidably engages a corresponding elongated cavity formed in the respective jaw 40, 42. In this elongated cavity, a thrust spring 58 is also received, which elastically stresses the respective crimping head 50, 52 so as to keep each head 50, 52 slightly spaced from the respective jaw 40, 42. The relative movement of each appendage 56 with respect to the relevant jaw 40, 42 is limited by a transverse pin connected to the jaw 40 or 42 and passing at least partially through the elongated cavity engaged by the appendage 56. This pin also slidably engages a slot formed in the appendage 56, the opposite ends of which constitute end-of-stroke surfaces for the sliding of this transverse pin.

A set of teeth or crimping punches 60, preferably four teeth 60 for each crimping head 50, 52, are slidably mounted in radial cavities passing through the respective head 50, 52. In particular, each tooth 60 has an inner end facing the cavity 54, having a tapered end provided with a plurality of arched ribs intended to contact the outer surface of a pipe fitting 12 to be gripped on the pipe 14 during the crimping operation. Each tooth 60 has an outer end on the side opposite to the crimping cavity 54, which consists of an inclined surface with respect to the axis of the respective tooth 60, which is intended to slide over a sliding surface associated with the respective jaw 40, 42. Preferably, each head 50, 52 supports two pairs of teeth 60, each pair being placed on one side with respect to the appendage 56, the outer ends of the teeth 60 of each pair of teeth being arranged in a slidable contact with a respective steel plate 62, conveniently of hardened steel, associated with the relevant jaw 40, 42. In the configuration shown in the figures, the sliding plates 62 are inclined at an angle of 45° with respect to the direction of common displacement of the jaws 40, 42, so that the surfaces of the outer ends of the teeth 60 are inclined at the same angle.

The teeth 60 are intended to undergo a displacement between a position at least partially rearward with respect to the crimping cavity 54, and a forward position in which they project into the cavity 54 to perform a crimping operation of a pipe fitting 12 on the pipe 14, as a result of a relative approach displacement of a crimping head 50, 52 and the respective jaw 40, 42. The return of the teeth 60 to their at least partially rearward position after the execution of a crimping operation is caused by elastic return means interposed between each tooth 60 and the respective head 50, 52. Preferably, these elastic means include a helical spring 64 arranged coaxially in a cylindrical seat that extends radially with respect to the crimping cavity 54, which is defined by a semi-cylindrical seat 66 formed on a lateral surface of the respective tooth 60, and by another semi-cylindrical seat 68 formed in a corresponding position on the inner surface of a removable cover 70 of the respective crimping head 50, 52.

In operation of the apparatus 10, after having positioned the pipe 14, such as its portions 14a, and the relative pipe fittings 12 on the reference members of the structure 18, the arm 26 of the movement means is controlled so as to carry the crimping unit 16 in succession at the crimping zones of the pipe 14.

To perform each crimping operation, the actuator 30 is initially actuated so as to cause the arcuate arms 34 and 36 to be moved in order to bring the jaws 40 and 42 into their most spaced position in which the crimping cavity 54 is completely open and it can be accessed from the outside of the crimping unit 16 through a lateral opening 55, by which the pipe 14 and the respective clamp 12 to be crimped can be introduced radially into the cavity 54.

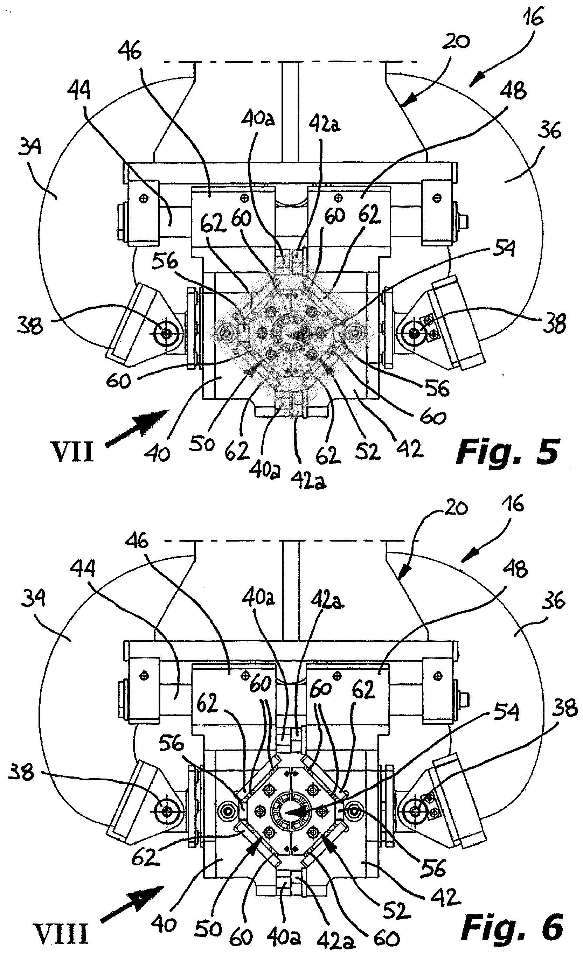

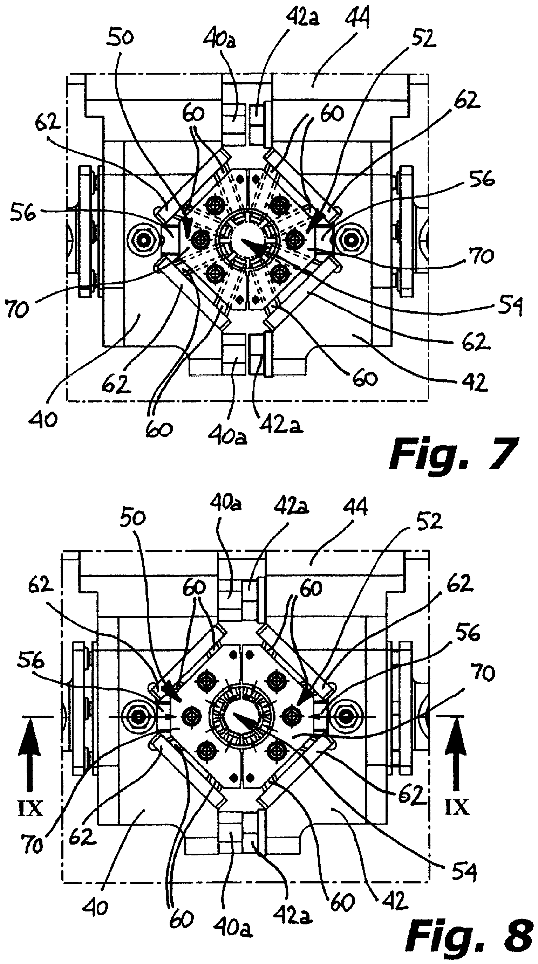

When the pipe 14 and the fitting 12 are properly positioned inside the cavity 54, the actuator 30 is controlled to cause displacement of the pin 32 in order to bring into rotation the arms 34 and 36 to mutually approach the jaws 40 and 42 until their crimping heads 50 and 52 are brought into mutual contact (Figures 5 and 7), closing the crimping cavity 54. In this configuration, the teeth 60 are still in their partially rearward position with respect to the crimping cavity 54.

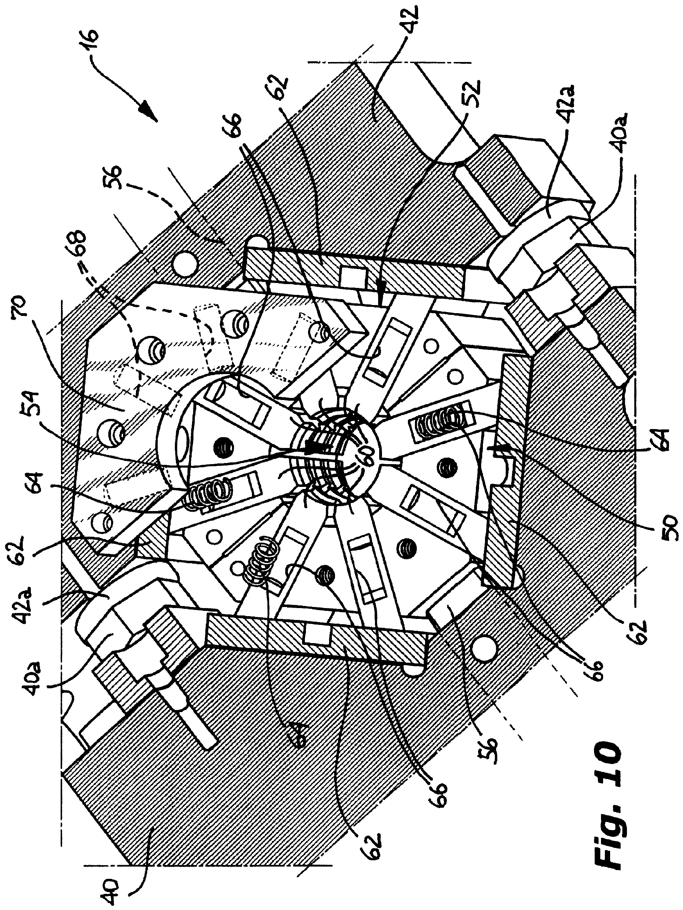

A further small approach displacement of the jaws 40 and 42, controlled by an additional displacement of the movable part of the actuator 30 and of the transverse pin 32, causes a relative approach displacement of the crimping heads 50, 52 with respect to the jaws 40, 42 (Figures 6, 8 and 10). This displacement ends when the abutment pads 40a and 42a are in mutual abutment. In this configuration, the appendages 56 move into the respective cavities of the jaws 40, 42, against the thrust action applied on them by the elastic means constituted by the thrust springs 58. The further movement of the heads 50, 52 with respect to the jaws 40, 42 causes the outer ends of the teeth 60 to slide on the plates 62, and consequently the advanced configuration of the teeth 60 to be achieved against the elastic action of the helical springs 64, in which they project substantially inside the crimping cavity 54 in order to be able to interfere with the outer surface of a pipe fitting 12 arranged in this cavity, so as to deform it plastically to make the crimping thereof on the pipe 14.

After the crimping operation is carried out, the actuator is driven so as to space the jaws 40 and 42 in order to open again the crimping cavity 54 and to make it possible removal of the crimping unit 54 from the zone of the gripping just made, in view of performing another crimping operation. At this stage, the thrust springs 58 return to their undeformed condition moving away the crimping heads from the respective jaws 40, 42, while the teeth 60 reaches again their relatively rearward position with respect to the cavity 54 as a result of the elastic action of the elastic return means constituted by the springs 64.

Of course, the apparatus 10 may be provided with sensor means (not shown), for example connected to the positioning structure 18 and/or to the crimping unit 16, to automatically detect the attainment of the proper crimping positions of the unit 16 with respect to the pipe 14, and to drive consequently the actuator 30 during the crimping operation. These sensor means are conveniently connected to a control unit of the ECU type of the apparatus 10, which is able to manage the steps of spatial movement of the unit 16 with respect to the structure 18 and to control the driving steps of the actuator 30.

## Claims

1. Crimping apparatus for crimping pipe fitting members on flexible pipes, comprising:
- a crimping unit (16) capable of assuming an open configuration and a closed configuration, and including a pair of relatively movable jaws (40, 42) between which a crimping cavity (54) is defined, which is adapted to receive a pipe (14, 14a) and a respective pipe fitting (12) to be crimped, which crimping cavity (54), in the open configuration of the crimping unit (16), is accessible from the outside of the apparatus (10) through a side opening (55),
- a set of crimping teeth (60) facing said cavity (54), which are movable between an at least partly rearward position with respect to said cavity (54), and a forward position in which they project radially into the cavity (54) in order to interfere with said pipe fitting (12) to connect it by crimping to said pipe (14, 14a),
- means (40, 42, 50, 52, 56, 58) for moving the crimping teeth (60) between said rearward and forward positions,
- a stationary structure (18) for positioning at least one pipe (14, 14a) and at least one pipe fitting (12) in a predetermined crimping configuration, and movement means (26) for spatially moving the crimping unit (16), which are adapted to bring the crimping unit (16) to at least one zone of said at least one pipe (14, 14a) that is positioned on the stationary structure (18), in order to perform a crimping operation of said at least one pipe fitting (12) on said at least one pipe (14, 14a),
**characterized in that** it comprises a pair of actuating arms (34, 36) each of which is connected to a respective jaw (40, 42) of the crimping unit (16) to cause the movement of the crimping jaws (40, 42) along a common direction of displacement, between a spaced position, in which a pipe (14, 14a) to be crimped can be introduced radially in said crimping cavity (54) together with a respective pipe fitting (12), and a close position, in which said crimping cavity (54) is radially closed outwards, both said actuating arms (34, 36) having a first end and a second end, the second end of each actuating arm (34, 36) being articulably connected to a respective jaw (40, 42) of the crimping unit (16) by a respective hinge pin (38), said crimping unit (16) comprising a frame (20) provided with connection means to connect it to said movement means (26), which frame (20) supports an actuator (30) for controlling the movement of said actuating arms (34, 36), the first end of both said actuating arms (34, 36) being articulated to a common rotation pin (32) which is connected to a portion of said actuator (30) that is movable with respect to said frame (20), which frame (20) supports linear guide means (44, 46, 48) to guide a sliding movement of said jaws (40, 42) along said common direction of displacement.

2. Apparatus according to claim 1, **characterized in that** said movement means for spatially moving the crimping unit (16) consist of a robotized arm (26).

3. Apparatus according to claim 1 or 2, **characterized in that** said linear guide means comprise a transverse rod (44) supported by said frame (20), on which rod two bushes (46, 48) are slidably mounted, each of which is connected to a respective crimping jaw (40, 42).

4. Apparatus according to any one of claims 1 to 3, **characterized in that** it comprises two crimping heads (50, 52) each associated with a respective crimping jaw (40, 42), which crimping heads (50, 52) are intended to reach a condition of mutual contact as a result of an approach movement of the two jaws (40, 42), each crimping head (50, 52) being movably mounted on the respective jaw (40, 42) against the action of elastic thrust means (58) as a consequence of a further movement of mutual approach of the jaws (40, 42), after the crimping heads (50, 52) have reached the condition of mutual contact.

5. Apparatus according to claim 4, **characterized in that** a set of crimping teeth (60) is associated with each crimping head (50, 52), said crimping teeth being movable with respect to the respective head (50, 52) and being able to undergo a displacement between said forward and rearward configurations as a result of said movement of the crimping heads (50, 52) with respect to the respective jaws (40, 42).

6. Apparatus according to claim 5, **characterized in that** each crimping jaw (40, 42) supports a pair of sliding plates (62) to allow sliding of the ends of the teeth (60) associated with a same crimping head (50, 52), which face the side opposite to said crimping cavity (54).

7. Apparatus according to claim 6, **characterized in that** said plates (62) are inclined, preferably with an angle of 45°, with respect to the direction of displacement of said jaws (40, 42).

8. Apparatus according to any one of claims 4 to 7, **characterized in that** elastic return means (64) are interposed between each crimping tooth (60) and the respective crimping head (50, 52), to bring the crimping tooth (60) back towards its rearward position.

9. Apparatus according to claim 8, **characterized in that** said elastic return means include a helical spring (64) arranged coaxially in a cylindrical seat (66, 68) that extends along the radial direction with respect to the crimping cavity (54), which seat (66, 68) is partially formed in the respective crimping tooth (60) and partially in a removable cover (70) of the respective crimping head (50, 52).

## Patentansprüche

1. Crimpvorrichtung zum Crimpen von Rohrfittings auf flexible Rohre, umfassend:
- eine Crimpeinheit (16), die in der Lage ist, eine offene Konfiguration und eine geschlossene Konfiguration anzunehmen, und die ein Paar von relativ beweglichen Backen (40, 42) umfasst, zwischen denen ein Crimphohlraum (54) definiert ist, der dazu ausgelegt ist, ein Rohr (14, 14a) und ein jeweiliges zu vercrimpendes Rohrfitting (12) aufzunehmen, wobei der Crimphohlraum (54) in der offenen Konfiguration der Crimpeinheit (16) von der Außenseite der Vorrichtung (10) durch eine Seitenöffnung (55) zugänglich ist,
- einen Satz von Crimpzähnen (60), die dem Hohlraum (54) zugewandt sind und die zwischen einer zumindest teilweise hinteren Position in Bezug auf den Hohlraum (54) und einer vorderen Position, in der sie radial in den Hohlraum (54) hineinragen, bewegbar sind, um mit dem Rohrfitting (12) in Eingriff zu kommen, um es durch Crimpen mit dem Rohr (14, 14a) zu verbinden,
- Mittel (40, 42, 50, 52, 56, 58) zum Bewegen der Crimpzähne (60) zwischen der hinteren und der vorderen Position,
- eine stationäre Struktur (18) zum Positionieren mindestens eines Rohrs (14, 14a) und mindestens eines Rohrfittings (12) in einer vorbestimmten Crimpkonfiguration, und Bewegungsmittel (26) zum räumlichen Bewegen der Crimpeinheit (16), die dazu ausgelegt sind, die Crimpeinheit (16) in mindestens einen Bereich des mindestens einen Rohrs (14, 14a) zu bringen, der auf der stationären Struktur (18) positioniert ist, um einen Crimpvorgang des mindestens einen Rohrfittings (12) auf das mindestens eine Rohr (14, 14a) durchzuführen,
**dadurch gekennzeichnet, dass** sie ein Paar von Betätigungsarmen (34, 36) umfasst, von denen jeder mit einer entsprechenden Backe (40, 42) der Crimpeinheit (16) verbunden ist, um die Bewegung der Crimpbacken (40, 42) entlang einer gemeinsamen Verschiebungsrichtung zwischen einer beabstandeten Position, in der ein zu crimpendes Rohr (14, 14a) zusammen mit einem jeweiligen Rohrfitting (12) radial in den Crimphohlraum (54) eingeführt werden kann, und einer geschlossenen Position, in der der Crimphohlraum (54) radial nach außen geschlossen ist, zu bewirken, wobei beide Betätigungsarme (34, 36) ein erstes Ende und ein zweites Ende aufweisen, wobei das zweite Ende jedes Betätigungsarms (34, 36) durch einen entsprechenden Gelenkstift (38) gelenkig mit einer entsprechenden Backe (40, 42) der Crimpeinheit (16) verbunden ist, wobei die Crimpeinheit (16) einen Rahmen (20) umfasst, der mit Verbindungsmitteln versehen ist, um ihn mit den Bewegungsmitteln (26) zu verbinden, wobei der Rahmen (20) ein Betätigungselement (30) zur Steuerung der Bewegung der Betätigungsarme (34, 36) trägt, wobei das erste Ende der beiden Betätigungsarme (34, 36) an einem gemeinsamen Drehstift (32) angelenkt ist, der mit einem Abschnitt des Betätigungselements (30) verbunden ist, der in Bezug zum Rahmen (20) bewegbar ist, wobei der Rahmen (20) lineare Führungsmittel (44, 46, 48) trägt, um eine Gleitbewegung der Backen (40, 42) entlang der gemeinsamen Verschiebungsrichtung zu führen.

2. Vorrichtung nach Anspruch 1, **dadurch gekennzeichnet, dass** die Bewegungsmittel zum räumlichen Bewegen der Crimpeinheit (16) aus einem robotisierten Arm (26) bestehen.

3. Vorrichtung nach Anspruch 1 oder 2, **dadurch gekennzeichnet, dass** die linearen Führungsmittel eine von dem Rahmen (20) getragene Querstange (44) umfassen, auf der zwei Buchsen (46, 48) verschiebbar angebracht sind, von denen jede mit einer entsprechenden Crimpbacke (40, 42) verbunden ist.

4. Vorrichtung nach einem der Ansprüche 1 bis 3, **dadurch gekennzeichnet, dass** sie zwei Crimpköpfe (50, 52) umfasst, die jeweils mit einer entsprechenden Crimpbacke (40, 42) verbunden sind, wobei die Crimpköpfe (50, 52) dazu bestimmt sind, infolge einer Annäherungsbewegung der zwei Backen (40, 42) einen Zustand des gegenseitigen Kontakts zu erreichen, wobei jeder Crimpkopf (50, 52) auf der jeweiligen Backe (40, 42) beweglich montiert ist, gegen die Wirkung von elastischen Druckmitteln (58) als Folge einer weiteren Bewegung der gegenseitigen Annäherung der Backen (40, 42), nachdem die Crimpköpfe (50, 52) den Zustand des gegenseitigen Kontakts erreicht haben.

5. Vorrichtung nach Anspruch 4, **dadurch gekennzeichnet, dass** jedem Crimpkopf (50, 52) ein Satz von Crimpzähnen (60) zugeordnet ist, wobei die Crimpzähne in Bezug auf den jeweiligen Kopf (50, 52) bewegbar sind und in der Lage sind, infolge der Bewegung der Crimpköpfe (50, 52) in Bezug zu den jeweiligen Backen (40, 42) eine Verschiebung zwischen der vorderen und hinteren Konfiguration zu erfahren.

6. Vorrichtung nach Anspruch 5, **dadurch gekennzeichnet, dass** jede Crimpbacke (40, 42) ein Paar Gleitplatten (62) trägt, um das Gleiten der Enden der Zähne (60) zu ermöglichen, die einem gleichen Crimpkopf (50, 52) zugeordnet sind, die der dem Crimphohlraum (54) gegenüberliegenden Seite zugewandt sind.

7. Vorrichtung nach Anspruch 6, **dadurch gekennzeichnet, dass** die Platten (62) in Bezug zur Verschiebungsrichtung der Backen (40, 42) geneigt sind, vorzugsweise in einem Winkel von 45°.

8. Vorrichtung nach einem der Ansprüche 4 bis 7, **dadurch gekennzeichnet, dass** elastische Rückstellmittel (64) zwischen jedem Crimpzahn (60) und dem jeweiligen Crimpkopf (50, 52) angeordnet sind, um den Crimpzahn (60) in seine hintere Position zurückzubringen.

9. Vorrichtung nach Anspruch 8, **dadurch gekennzeichnet, dass** die elastischen Rückstellmittel eine Schraubenfeder (64) umfassen, die koaxial in einem zylindrischen Sitz (66, 68) angeordnet ist, der sich entlang der radialen Richtung in Bezug zum Crimphohlraum (54) erstreckt, wobei der Sitz (66, 68) teilweise in dem jeweiligen Crimpzahn (60) und teilweise in einer entfernbaren Abdeckung (70) des jeweiligen Crimpkopfes (50, 52) ausgebildet ist.

## Revendications

1. Appareil de sertissage pour sertir des éléments de raccord de tuyaux sur des tuyaux flexibles, comprenant :
- une unité de sertissage (16) apte à prendre une configuration ouverte et une configuration fermée, et comprenant une paire de mâchoires (40, 42) mobiles les unes par rapport aux autres, entre lesquelles une cavité de sertissage (54) est définie, qui est adaptée pour recevoir un tuyau (14, 14a) et un raccord de tuyau respectif (12) à sertir, laquelle cavité de sertissage (54), dans la configuration ouverte de l'unité de sertissage (16), est accessible depuis l'extérieur de l'appareil (10) par une ouverture latérale (55),
- un ensemble de dents de sertissage (60) en regard de ladite cavité (54), qui sont mobiles entre une position au moins en partie reculée par rapport à ladite cavité (54), et une position avancée dans laquelle elles font saillie radialement dans la cavité (54) afin d'interférer avec ledit raccord de tuyau (12) pour le raccorder par sertissage audit tuyau (14, 14a),
- des moyens (40, 42, 50, 52, 56, 58) pour déplacer les dents de sertissage (60) entre lesdites positions reculée et avancée,
- une structure fixe (18) pour positionner au moins un tuyau (14, 14a) et au moins un raccord de tuyau (12) dans une configuration de sertissage prédéterminée, et des moyens de déplacement (26) pour déplacer spatialement l'unité de sertissage (16), qui sont adaptés pour amener l'unité de sertissage (16) sur au moins une zone dudit au moins un tuyau (14, 14a) qui est positionnée sur la structure fixe (18), afin d'effectuer une opération de sertissage dudit au moins un raccord de tuyau (12) sur ledit au moins un tuyau (14, 14a),
**caractérisé en ce qu'**il comprend une paire de bras d'actionnement (34, 36) dont chacun est relié à une mâchoire respective (40, 42) de l'unité de sertissage (16) pour provoquer le mouvement des mâchoires de sertissage (40, 42) selon une direction de déplacement commun, entre une position d'écartement, dans laquelle un tuyau (14, 14a) à sertir peut être introduit radialement dans ladite cavité de sertissage (54) avec un raccord de tuyau respectif (12), et une position de rapprochement, dans laquelle ladite cavité de sertissage (54) est radialement fermée vers l'extérieur, lesdits bras d'actionnement (34, 36) ayant tous deux une première extrémité et une deuxième extrémité, la deuxième extrémité de chaque bras d'actionnement (34, 36) étant reliée de manière articulée à une mâchoire respective (40, 42) de l'unité de sertissage (16) par un axe d'articulation respectif (38), ladite unité de sertissage (16) comprenant un châssis (20) pourvu de moyens de liaison pour le relier auxdits moyens de déplacement (26), lequel châssis (20) supporte un actionneur (30) pour commander le mouvement desdits bras d'actionnement (34, 36), la première extrémité des deux dits bras d'actionnement (34, 36) étant articulée à un axe de rotation commun (32) qui est relié à une partie dudit actionneur (30) qui est mobile par rapport audit châssis (20), lequel châssis (20) supporte des moyens de guidage linéaires (44, 46, 48) pour guider un mouvement de coulissement desdites mâchoires (40, 42) le long de ladite direction de déplacement commun.

2. Appareil selon la revendication 1, **caractérisé en ce que** lesdits moyens de déplacement pour déplacer dans l'espace l'unité de sertissage (16) consistent en un bras robotisé (26) .

3. Appareil selon la revendication 1 ou la revendication 2, **caractérisé en ce que** lesdits moyens de guidage linéaire comprennent une tige transversale (44) supportée par ledit châssis (20), sur laquelle sont montées à coulissement deux douilles (46, 48) dont chacune est reliée à une mâchoire de sertissage respective (40, 42).

4. Appareil selon l'une quelconque des revendications 1 à 3, **caractérisé en ce qu'**il comprend deux têtes de sertissage (50, 52) associées chacune à une mâchoire de sertissage respective (40, 42), lesquelles têtes de sertissage (50, 52) sont destinées à atteindre une condition de contact mutuel à la suite d'un mouvement de rapprochement des deux mâchoires (40, 42), chaque tête de sertissage (50, 52) étant montée mobile sur la mâchoire respective (40, 42) à l'encontre de l'action de moyens de poussée élastiques (58) comme conséquence d'un autre mouvement de rapprochement mutuel des mâchoires (40, 42), après que les têtes de sertissage (50, 52) aient atteint l'état de contact mutuel.

5. Appareil selon la revendication 4, **caractérisé en ce qu'**un ensemble de dents de sertissage (60) est associé à chaque tête de sertissage (50, 52), lesdites dents de sertissage étant mobiles par rapport à la tête respective (50, 52) et étant aptes à subir un déplacement entre lesdites configurations avancée et reculée à la suite dudit mouvement des têtes de sertissage (50, 52) par rapport aux mâchoires respectives (40, 42).

6. Appareil selon la revendication 5, **caractérisé en ce que** chaque mâchoire de sertissage (40, 42) supporte une paire de plaques coulissantes (62) pour permettre le coulissement des extrémités des dents (60) associées à une même tête de sertissage (50, 52), qui font face au côté opposé à ladite cavité de sertissage (54).

7. Appareil selon la revendication 6, **caractérisé en ce que** lesdites plaques (62) sont inclinées, de préférence d'un angle de 45°, par rapport à la direction de déplacement desdites mâchoires (40, 42).

8. Appareil selon l'une quelconque des revendications 4 à 7, **caractérisé en ce que** des moyens de rappel élastique (64) sont interposés entre chaque dent de sertissage (60) et la tête de sertissage respective (50, 52), pour ramener la dent de sertissage (60) vers sa position reculée.

9. Appareil selon la revendication 8, **caractérisé en ce que** lesdits moyens de rappel élastique comprennent un ressort hélicoïdal (64) disposé coaxialement dans un siège cylindrique (66, 68) qui s'étend selon la direction radiale par rapport à la cavité de sertissage (54), lequel siège (66, 68) est partiellement formé dans la dent de sertissage respective (60) et partiellement dans un couvercle amovible (70) de la tête de sertissage respective (50, 52).
